# EUROPEAN PATENT APPLICATION

(11) **EP 1 038 733 A2**
(43) Date of publication of application: **27.09.2000**
(21) Application number: 00302459.3
(22) Date of filing: 27.03.2000
(51) Int. Cl.: B60R 19/26

(54) **Energy absorbing arrangements**

(30) Priority: 26.03.1999 GB 9907093
(71) Applicant: DRAFTEX INDUSTRIES LIMITED, Edinburgh EH2 3AP, Scotland (GB)
(72) Inventor: Tournier, Pascal, 44330 La Pallet (FR); Le Tanter, Corinne, 44980 Sainte Luce sur Loire (FR)
(74) Representative: Bibby, William Mark

(57) **Abstract**

An energy absorbing arrangement (10) comprises a conical tube (16), made of thermoplastic material and having an integral end face (18) carrying a bracket (19) for supporting a vehicle bumper. Its other end has a flange (20) with holes for receiving fixtures (24) to attach it to the front of the vehicle. In response to an impact on the bumper, energy is absorbed by micro-rupture of the material of the tube (16). At the same time, a tongue (26) is forced through a hole (32) in a plate (12) on or forming part of the front (or rear) of the vehicle, and claws (28) prevent reverse movement of the tongue (26). The bumper therefore remains supported even after micro-rupture of the tube (16).

## Description

The invention relates to shock absorbing arrangements. Shock absorbing arrangements embodying the invention, and to be described in more detail below by way of example only, may be used in association with vehicle bumpers.

According to the invention, there is provided an energy absorbing arrangement, comprising energy absorbing means extending between a mounting region adapted to be attached to a substantially rigid mount and an impact-receiving region including means for supporting an impact-receiving member whereby an impact received by a so-supported impact-receiving member causes at least partial compression of the energy absorbing means against the mount, and retaining means operative to hold the impact-receiving region secured with reference to the mounting region after the said compression.

Shock absorbing arrangements embodying the invention, and for use in association with vehicle bumpers, will now be described, by way of example only, with reference to the accompanying diagrammatic drawings in which:
Figure 1 is a cross-section through one of the shock absorbing arrangements;
Figure 2 is an enlarged view corresponding to part of Figure 1, showing a modification;
Figure 3 is a view corresponding to another part of Figure 1 and showing another modification;
Figure 4 is a cross-section though another of the shock-absorbing arrangements;
Figure 5 shows a modification to the arrangement of Figure 4;
Figure 6 is a cross-section though another of the shock-absorbing arrangements;
Figure 7 is a cross-section though another of the shock-absorbing arrangements;
Figure 8 is a cross-section through another of the shock-absorbing arrangements;
Figure 9 is a cross-section though another of the shock-absorbing arrangements;
Figure 10 is an enlarged more detailed cross-sectional view of the part of Figure 9 circled at C; and
Figure 11 is a cross-section though another of the shock-absorbing arrangements.

The shock absorbing arrangements to be described are for supporting a bumper (not shown) on the front or rear end of a motor vehicle. In the description which follows, it will be assumed that the shock absorbing arrangements to be described are for supporting the front bumper. However, they can equally well be used for supporting the rear bumper. In all the Figures, like parts have similar reference numerals.

An important aim of the arrangements to be described is to reduce the cost of repairing the vehicle after an impact. In the case of an impact at up to 15km/hr, it should not normally be sufficient to replace any the bumper and the shock absorbing arrangement. In order to achieve this aim, the shock absorbing arrangements must absorb a substantial amount of energy without transferring too high a load to the body of the vehicle which might cause injury or discomfort to the passengers. In order to achieve this, the impact should be absorbed with a constant load.

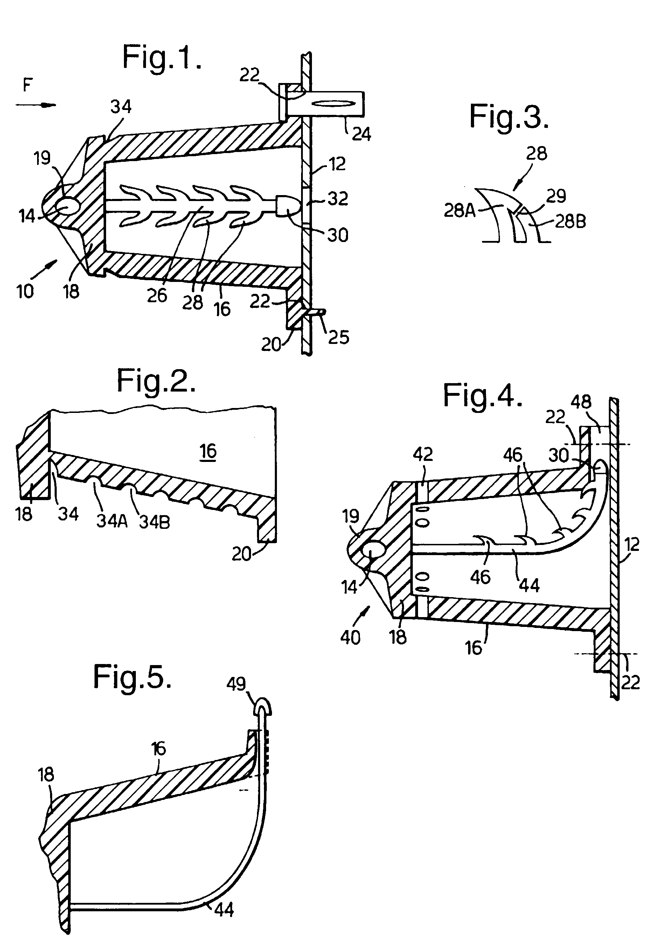

The shock absorbing arrangement 10 of Figure 1 projects forwardly from the front end of the vehicle and is mounted, in a manner to be described, on a plate 12 which forms a rigidly strong part of the vehicle sub-frame or chassis. There would be two or more of these shock absorbing arrangements arranged at intervals across the front end of the vehicle. Each of them is provided with a fixture or fixing hole 14 by means of which the bumper (not shown) is supported by all the shock absorbing arrangements.

The shock absorbing arrangement 10 comprises a tube 16, slightly conical, made of a composite thermoplastic material, such as PA66 or PP, by a moulding or injection process, possibly reinforced with glass fibres or similar reinforcing material. The tube 16 has an integral end face 18 carrying a bracket 19 for the hole 14. Its other end has a flange 20 provided with holes 22 receiving fixtures 24 (only one shown) by means of which the shock absorbing arrangement 10 is rigidly mounted on the plate 12. The flange also supports a pin 25 for locating in a hole in the plate 12.

In addition, the tube 16 carries an extending rod or tongue 26 having integral and sideways extending claws 28. The tongue 26 and the claws 28 may be integrally produced with the tube 16 or formed separately and secured to it. The distal end of the tongue 26 carries a head 30 which faces a hole 32 in the plate 12.

In the event of a substantial impact on the vehicle bumper, the tube 16 becomes partially collapsed in the direction of the arrow F, depending on the strength of the impact. Micro-rupture of the material of the tube 16 takes place, which absorbs the energy of the impact.

Where the tube 16 meets the end 18, a circumferential groove or slot 34 is formed which weakens the strength of the tube 16 at this point so as to limit the maximum force which can be transmitted by the shock absorbing arrangement 10 in response to an impact. In addition, the slot 34 serves as the region where the micro-rupture starts. In the absence of the slot 34, generalised micro-rupture would occur immediately, which would provide weaker energy absorption.

In response to the impact, the tube 16 (and the tubes 16 of the other similar arrangements also supporting the same bumper) will become partially or wholly collapsed, causing the tongue 26 to be forced through the hole 32 to a lesser or greater extent. The extremities of the claws 28 flex to allow their entry into and through the hole 32 and then resile to resist return movement of the tongue 26. In this way, therefore, the end 18 of the tube 16 is held firmly in position on or against the plate 12, even though the tube 16 has been partly or substantially wholly crushed and therefore destroyed. Therefore, the bumper (not shown) continues to be supported across the end of the vehicle. Provided that the impact of the bumper has not been so severe that substantial damage has been done to the body and working parts of the vehicle, the vehicle can still be driven to where it may be prepared. Without the tongue 26 and its claws 28, it is likely that the bumper would no longer be supported by the shock absorbing arrangement 10 after a severe impact and would drop, therefore dragging on or near the ground, making it impossible to drive the vehicle.

It is important that the tongue 26 remains in alignment with the hole 32 during the life of the vehicle and does not droop through ageing. Advantageously, therefore, the tongue is arranged to be rectangular in cross-section to increase its resistance to bending. The tongue and claw arrangement has a greater width (see Figure 1) than thickness. After an impact, the bumper and the shock absorber arrangement must be removed by unbolting. The shock absorbing arrangement is then turned through 90° to allow withdrawal of the tongue 26 and claws 28 through the hole 32. A new shock absorber and bumper can then be fitted.

The shock absorbing characteristics of the tube 16 may be varied changing the thickness or the material of the tube, by changing the size or depth of the groove 34 and/or providing one or more other grooves at different positions along the tube 16; the separate shock absorbing arrangements supporting the same bumper may have differently arranged or differently sized grooves 34 to provide a desired overall characteristic. Figure 2 shows how the wall of the tube 16 can be provided with such further grooves 34A,34B.

Figure 3 shows, in enlarged form a modified configuration which each of the claws 28 can take. As shown, one such modified claw is made with two parts 28A and 28B with a gap 29 between them. This configuration increases the flexibility of the claw when the tongue 26 is forced through the aperture 32 but also ensures that the claws strongly resist return movement of the tongue.

Figure 4 shows another shock absorbing arrangement 40.

In the shock absorbing arrangement 40, the groove 34 of the shock absorbing arrangement 10 is replaced by circumferentially arranged holes 42, or several slots, through the wall of the tube 16. These holes 42 are for the same purpose as forte groove 34 of Figure 1 (but, of course, the holes could be replaced by one or more such grooves - or the groove or grooves 34,34A,34B... of Figures 1 and 2 could be replaced by holes).

In addition, the tongue 26 of the shock absorbing arrangement 10 is replaced by a modified form of tongue 44 which carries claws 46 extending from one side only of the tongue 44. In addition, the tongue 44 is curved and extends so that its head 30 is located in a sideways extending bore 48 defined between part of the flange 20 of the tube 16 and the plate 12.

As before, several shock absorbing arrangements 40 would be provided across the end of the vehicle to support the bumper by means of the fixing holes 14.

The operation of the shock absorbing arrangement 40 in response to an impact is substantially similar to that of the shock absorbing arrangement 10. The holes 42 limit the peak impact force, and respond to the impact by causing micro-rupture of the material of the tube 16 and consequent absorption of the energy of the impact.

In response to such an impact, however, the end of the tongue 44 is forced further into and through the bore 48, each claw 46 being flexed inwardly to allow such movement, and then resiling as it emerges from the open end of the bore 48, preventing return movement of the tongue 44. As with the shock absorbing arrangement 10 of Figure 1, therefore, the tongue 44 ensures that the end 18 of the tube 16 is held securely against the plate 12 of the vehicle body, and thus the shock absorbing arrangement 40 (and the other similar shock absorbing arrangements mounted on the end of the vehicle) continues to support the bumper, even after the impact and consequent crushing and partial or complete destruction of the tube 16. The claws 46 could have the form shown in Figure 3. The tongue 44 could have the modified form shown in Figure 5, without the claws 46 but with a single enlarged head 49. The tongue 44 could be made of thermoplastic material, metal or fibre for example.

The shock absorbing arrangement 40 is advantageous over the shock absorbing arrangement 10 in that its operation is self contained: it does not need a hole 32 to be formed in the plate 12.

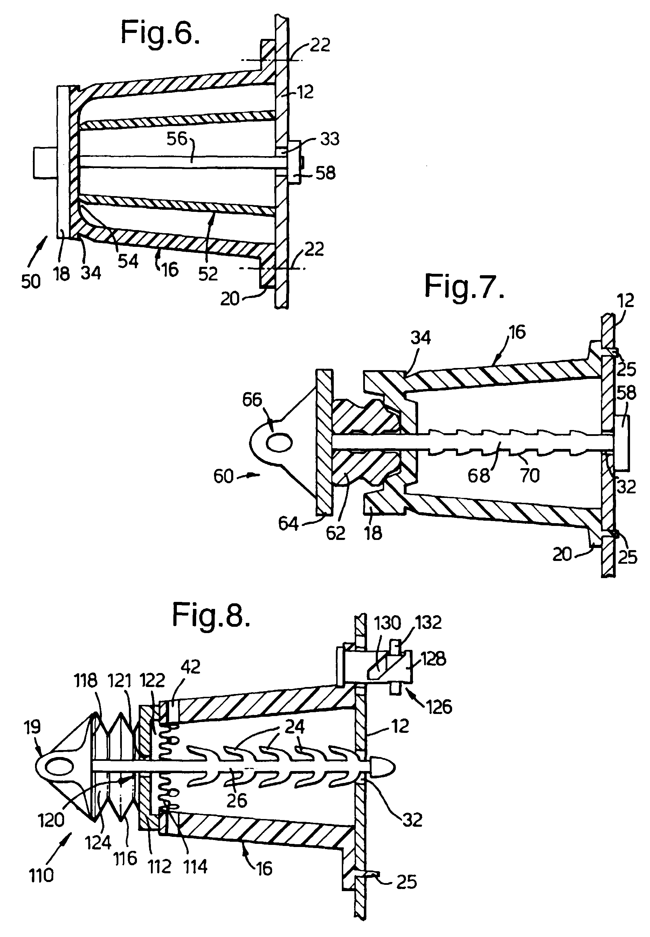

In the shock absorbing arrangement 50 of Figure 6, various modifications are shown.

The end 18 is of modified form. In addition, however, the tube 16 is supplemented by an inner tube 52, also of slightly conical shape but of lesser diameter, preferably made of the same material as the tube 16. The second tube 52 may also be produced by moulding, injection or similar process. Where it is joined to the end 18, it is provided with a circumferential groove 54 for the same purpose as the groove 34 of Figure 1.

In the shock absorbing arrangement 50, the tongues 26 and 44 are replaced by a rod 56 which extends through a slot 33 in the plate 12 on the vehicle body, the rod 56 terminating in a pin 58. The slot 33 has a greater length than width, the width being seen in Figure 3. During mounting of the shock absorbing arrangement 50, it is turned to a right angle about its central axis, as compared with its position shown in the Figure, so that the pin 58 can pass through the long dimension of the slot 33. The shock absorbing arrangement 50 is then turned through 90°, into the position shown in the Figure, so that the pin 58 cannot now pass back through the slot 33.

In response to a substantial impact on the bumper (not shown), the operation is generally as already described. Energy absorption takes place by micro-rupture of the tube 16 - but, in this case, further energy absorption takes place by micro-rupture of the material of the second tube 52. The tongue 56, with its pin 58, ensures that the bumper still remains supported by the tongue and the pin after the tubes 16 and 52 have been wholly or partially destroyed.

In the shock absorbing arrangement 60 shown in Figure 7, the end 18 of the tube 16 is recessed to receive and locate one end of an abutment block of elastomeric material 62 which is held, in pre-compressed form, between the head 18 and the underside of a plate 64 carrying the bracket 19 for the bumper. The plate 64 is supported by one end of a tongue 68 which passes freely through a hole in the end 18 of the tube 16 and carries resilient ridges 70 at intervals therealong. Its distal end passes through a slot 33, similar to the slots 33 of Figure 6, terminating in a pin 58.

The flange 20 of the tube 16 is provided with locating pins 25 (see Fig. 1) which locate in holes in the plate 12. With the arrangement shown in Figure 7, fixing bolts or other fixtures to secure the flange 20 to the plate 12 are not necessary. The shock absorbing arrangement 60 is held firmly in position by the pin 58 which bears against the side of the plate 12 and thus holds the fixture 66 securely in position for mounting the bumper. As before, of course, there would be several similar shock absorbing arrangements mounted across the end of the vehicle.

In similar fashion to the arrangement of Figure 6, the pin 58 is passed through the slot 33 by turning the shock absorbing arrangement 60 though 90°, and then turning it back again to move the pin into the position shown in Figure 7. The tongue 68 can be made in metal and possibly over-moulded with an elastomer in the same operation producing the abutment 62. The over-moulding process can produce the ridges 70.

In operation, small impacts on the bumper are absorbed by the resilience of the abutment block of elastomeric material 62. In the event of a substantial impact, however, micro-rupture of the tube 16 takes place, and absorbs the energy of the impact.

As before, such an impact forces the tongue 68 though the slot 33 to a lesser or greater extent, the ridges 70 becoming compressed to allow such movement to take place, then resiling to prevent return movement of the tongue. Again, therefore, the bumper is firmly supported even though the tube 16 has been partially or wholly destroyed.

In the shock absorbing arrangement 110 of Figure 8, a tube 16, made of reinforced thermoplastic material for example, has bores 42 for the same purpose as in the shock absorbing arrangement of Figure 4. Its smaller diameter end is closed off by an end plate 112 which is secured across the open smaller diameter end of the tube 16 in any suitable way and carries a flexible diaphragm 114. Its opposite face carries one end of a flexible bellows 116 whose other end is attached to one face 118 of a bracket 19 for securing the bumper (not shown). The diaphragm 114 and the bellows 116 can be made of a thermoplastic elastomer or metal, for example.

A tongue 26 carrying claws 28 extends rigidly from the plate 118, through an enlarged hole 120 in the end plate 112, through the diaphragm 114, terminating in a head 30 which extends through a hole 32 in the plate 12.

The diaphragm 114 is sealed across the end of the tube 16 and also sealed around the tongue 26, so as to define a compensation chamber 122. Similarly, the opposite ends of the bellows 116 are sealed to the end closure 112 and the plate 118 respectively so as to define a working chamber 124. The working and compensation chambers 124,122, are filled with hydraulic fluid and are interconnected by means of a conduit 121 provided by the hole 120 which is larger than the external diameter of the tongue 26.

In operation, small impacts on the bumper (not shown) are absorbed by movement of the hydraulic fluid between the working and compensation chambers through the narrow conduit 121, the energy of the small impact being absorbed partially by loss of pressure caused by the movement of the hydraulic fluid between the two chambers and partially by the resilient expansion of the bellows 116 and the diaphragm 114.

In the event of a substantial impact, however, micro-rupture of the tube 16 takes place, in the manner already explained, the energy of the impact being consequently absorbed.

In the event of such an impact, the tongue 26 would be forced further through the hole 32, one or more of the claws 28 flexing to allow it or them to pass though the hole 32, thereafter resiling to prevent reverse movement of the tongue 26. As before, therefore, the bumper (not shown) is held firmly to the body of the vehicle, even after partial or complete destruction of the tube 16.

Figure 8 also shows a fixing arrangement 126 which may be integrated with the flange 20 of the tube 16 by over-moulding or in any other suitable way. A cage 128 is provided with a helicoidal slot 130 in which is located a locking member 132. In the position shown of the locking member 132, it can pass through an elongate slot 134 in the plate 12, this slot having a greater length than width. Thereafter, the locking member 132 is rotated through 90°, consequently being driven by the helicoidal slot 130 towards the plate 12 to hold the tube 16 in position. Several of the fixing arrangements 126 may be provided around the flange 20.

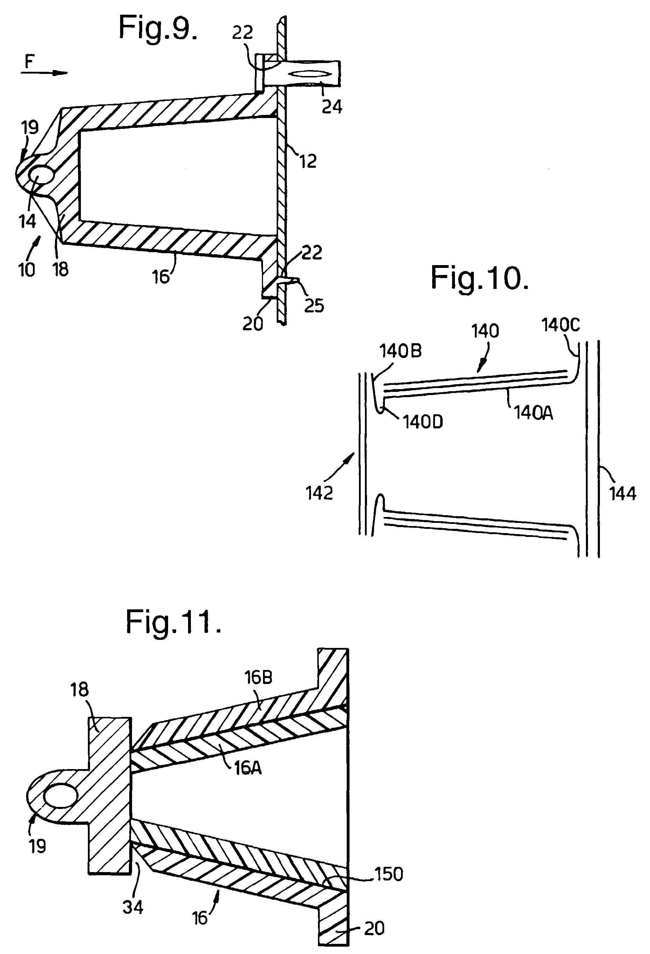

Figure 9 shows a modified form of the configuration of Figure 1 but in which the tongue 26 is omitted. In the arrangement of Figure 9, the material of the tube 16 is reinforced with layers of textile-type material. These layers are not shown in Figure 9 but are shown separately in Figure 10. Figure 10 shows the layers 140 in the tubular part 16. The textile-type material may, for example, be reinforced fibres woven with fibres of thermoplastic material such as glass fibre material woven with fibres of material such as polypropylene or polyamide and formed by injection or thermo compression for example. In the event of an impact on the bumper, the energy of the impact is absorbed by micro-rupture of the thermoplastic material as already explained. In the case of the configuration shown in Figures 9 and 10, however, the layers 140 serve to support the bumper after the impact and the tongue 26 of Figure 1 is not required. The layers will become delaminated but will not be broken and will remain fixed at their ends.

As shown in Figure 10, the inner layer 140A is enlarged compared with the others and curved over at its ends 140B and 140C to connect the ends of the conical tube to the end 18 of the tube and to the flange 20; the layers 142 and 144 for the end 18 and the flange 20 are shown in the Figure. In addition, the end 140B of layer 140 is advantageously formed to provide a fold or groove 140D. This increases the flexibility of this end of the tube to enable it better to receive impacts, especially impacts which are inclined to the longitudinal axis of the tube.

Figure 11 shows a modified form of the arrangement shown in Figures 9 and 10. In this case the tube 16 is made of two conical parts 16A,16B to provide extra energy absorption. Part 16A is produced first and part 16B can then be added by an over-moulding process. Prior to the over-moulding step, a layer 150 reinforcing textile material can be placed on the outside of the part 16A. Instead, however, the two parts 16A,16B can be produced separately and fixed together by force-fitting or by means of suitable fixing means such as clips or adhesive, possibly leaving a gap between them. Separate production of the parts 16A,16B allows them to be produced simultaneously, thus reducing production time.

The shock-absorbing arrangements shown in the Figures can be integrated with a sensor for responding to art impact and activating an air-bag in the vehicle's passenger compartment. In addition, or instead, a sensor can be incorporated to respond to an impact by indicating that a replacement bumper and shock-absorbing arrangement are necessary. More specifically, a sensor can be mounted on the shock-absorbing arrangement to provide different signals according to the severity of the impact: a small impact produces merely an indication; a slightly greater impact produces a signal indicating that bumper replacement is necessary; a greater impact produces a signal indicating that replacement of the bumper and the shock-absorbing arrangements is necessary; and a major shock activates the air-bags. Clips can be incorporated in the shock absorbing arrangements for holding electrical cables for lighting and other purposes.

## Claims

1. An energy absorbing arrangement, comprising energy absorbing means extending between a mounting region adapted to be attached to a substantially rigid mount and an impact-receiving region including means for supporting an impact-receiving member whereby an impact received by a so-supported impact-receiving member causes at least partial compression of the energy absorbing means against the mount, and retaining means operative to hold the impact-receiving region secured with reference to the mounting region after the said compression.

2. An energy absorbing arrangement according to claim 1, in which the retaining means interlocks the impact-receiving region to the mounting region by interlocking the impact-receiving region to the rigid mount when the mounting region is attached to the rigid mount.

3. An energy absorbing arrangement according to claim 2, in which the retaining means comprises an elongate member fixed relative to the impact-receiving member and extending therefrom for locking with the rigid mount.

4. An energy absorbing arrangement according to claim 2, in which the energy absorbing means extends in an elongate manner between the two regions, and the retaining means comprises an elongate member fixed relative to the impact-receiving region and extending therefrom to the mounting region whereby to be forced into interlocking relationship with the rigid mount in response to the said compression.

5. An energy absorbing arrangement according to claim 4, in which the elongate member carries at least one transversely extending resilient locking element which is adapted to be resiliently forced though a hole in the rigid mount in response to the said compression and operative to resist reverse movement.

6. An energy absorbing arrangement according to claim 5, in which the elongate member carries a plurality of longitudinally spaced similar locking elements.

7. An energy absorbing arrangement according to claim 5 or 6, in which the or each locking element comprises two parts extending from the elongate member in generally parallel directions inclined towards the impact-receiving region and closely spaced apart along the elongate member, the part closer to the impact-receiving region having an extension facing the distal end of the other part whereby the reverse movement is resisted by contact between the extension and the said distal end.

8. An energy absorbing arrangement according to claim 1, in which the retaining means comprises an elongate member fixed relative to the impact-receiving region and extending therefrom to the mounting region for interlocking with the mounting region.

9. An energy absorbing arrangement according to claim 8, in which the elongate member carries at least one locking element which interlocks with a matching locking element fixed with reference to the mounting region.

10. An energy absorbing arrangement according to claim 9, in which the locking element comprises at least one transversely extending resilient element which moves into interlocking engagement with the matching locking element as the elongate member moves longitudinally in response to the said compression.

11. An energy absorbing arrangement according to claim 10, in which the matching locking element comprises an aperture through which the distal end of the elongate member extends in response to the said compression.

12. An energy absorbing arrangement according to claim 11, in which the locking element passes through the aperture in response to the said compression.

13. An energy absorbing arrangement according to claim 12, in which the transverse dimension of the locking element and the elongate member in a first plane is greater than in an orthogonal plane and in which the aperture is an elongate slot having a narrow dimension less than the transverse dimension of the locking element and the elongate member in the first plane, the said transverse dimension normally being aligned with the narrow dimension of the slot, the length dimension of the slot being greater than the transverse dimension of the locking element and the elongate member to enable them to be withdrawn through the slot after angular turning about the length of the elongate member.

14. An energy absorbing arrangement according to preceding claim, in which the energy absorbing means is of hollow tubular form.

15. An energy absorbing arrangement according to any one of claims 3 to 11, in which the energy absorbing means is of hollow tubular form and the elongate member extends within the hollow interior thereof.

16. An energy absorbing arrangement according to any preceding claim, in which the energy absorbing means comprises thermoplastic material reinforced with textile material.

17. An energy absorbing arrangement according to claim 1, in which the energy absorbing means comprises thermoplastic material reinforced with textile material, and in which the textile material constitutes the retaining means.

18. An energy absorbing arrangement according to claim 14, in which the energy absorbing means is of hollow tubular form and the elongate member extends within the hollow interior thereof. the textile material is in the form of at least one sheet curved about the axis of the hollow tubular form but with the ends of the sheet at the opposite ends of the hollow tubular form curved outwardly away from the said axis for attachment respectively to the impact-receiving and mounting regions.

19. An energy absorbing arrangement according to claim 18, in which the outwardly curved end for attachment to the impact-receiving region includes a portion defining a fold for resiliently receiving an impact transmitted to it by the impact-receiving member.

20. An energy absorbing arrangement according to claim 18 or 19, including a plurality of further sheets of textile material, the further sheets being curved about the axis of the hollow tubular form and located outwardly of the first-mentioned sheet.

21. An energy absorbing arrangement according to any one of claims 14,15,18,19 and 20, in which the hollow tubular form is a frusto-conical form with its narrower end adjacent the impact-receiving member.

22. An energy absorbing arrangement according to any preceding claim, in which the energy absorbing means comprises two separate parts, the second one superimposed on the first one thereof

23. An energy absorbing arrangement according to claim 22, in which the second part of the energy absorbing means is interlocked with the first part.

24. An energy absorbing arrangement according to claim 22, in which the second part of the energy absorbing means is superimposed on the first part by over-moulding.

25. An energy absorbing arrangement according to any preceding claim, in which the energy absorbing means absorbing energy by micro-rupture.

26. An energy absorbing arrangement according to any preceding claim, in which the energy absorbing means comprises thermoplastic material.

27. An energy absorbing arrangement according to claim 26, in which the thermoplastic material is reinforced with fibres.

28. An energy absorbing arrangement according to any one of claims 1 to 23, in which the energy absorbing means comprises reinforced fibres woven with other fibres of thermoplastic material.

29. An energy absorbing arrangement according to any preceding claim, including sensing means responsive to an impact received by the impact-receiving region for producing a corresponding signal.

30. An energy absorbing arrangement according to claim 29, in which the signal indicates the severity of the impact.

31. An energy absorbing arrangement according to any preceding claim and mounted on a vehicle, in which the impact-receiving member is a bumper of the vehicle.

32. An energy absorbing arrangement according to claim 30 or 31, the arrangement being mounted on a vehicle and the impact-receiving member being a bumper of the vehicle, the signal being connected to activate an air bag of the vehicle.
